# FASCICULE DE BREVET EUROPEEN

(11) **EP 0 844 117 B1**
(45) Date de publication et mention de la délivrance du brevet: **23.10.2002**
(21) Numéro de dépôt: 97402776.5
(22) Date de dépôt: 19.11.1997
(51) Int. Cl.: B60G 17/015, B60G 21/10

(54) **Dispositif électrohydraulique de correction de hauteur de la caisse d'un véhicule automobile à deux essieux**
Elektrohydraulische Niveaukorrektureinrichtung für die Karosserie eines zweiachsigen Kraftfahrzeuges
Electrohydraulic device for height correction of the body of a motor vehicle with two axles

(30) Priorité: 22.11.1996 FR 9614266
(43) Date de publication de la demande: 27.05.1998
(73) Titulaire: AUTOMOBILES PEUGEOT, 75116 Paris (FR); AUTOMOBILES CITROEN, 92200 Neuilly-sur-Seine (FR)
(72) Inventeur: Dessirieix, José, 91190 Gif-Sur-Yvette (FR); Halconruy, Thierry, 78000 Versailles (FR)
(74) Mandataire: Gendraud, Pierre

(56) Documents cités:
- DE-A- 3 223 263
- DE-A- 4 035 204
- US-A- 4 618 156
- PATENT ABSTRACTS OF JAPAN vol. 012, no. 340 (M-740), 13 septembre 1988 & JP 63 101116 A (NISSAN SHATAI CO LTD), 6 mai 1988,
- PATENT ABSTRACTS OF JAPAN vol. 011, no. 344 (M-640), 11 novembre 1987 & JP 62 122810 A (SHOWA MFG CO LTD), 4 juin 1987,
- PATENT ABSTRACTS OF JAPAN vol. 009, no. 307 (M-435), 4 décembre 1985 & JP 60 143114 A (HITACHI SEISAKUSHO KK), 29 juillet 1985,
- PATENT ABSTRACTS OF JAPAN vol. 006, no. 130 (M-143), 16 juillet 1982 & JP 57 055208 A (TOYOTA MOTOR CORP;OTHERS: 01), 2 avril 1982,
- PATENT ABSTRACTS OF JAPAN vol. 095, no. 009, 31 octobre 1995 & JP 07 164853 A (TOYOTA MOTOR CORP;OTHERS: 01), 27 juin 1995,
- PATENT ABSTRACTS OF JAPAN vol. 015, no. 155 (M-1104), 18 avril 1991 & JP 03 028011 A (MAZDA MOTOR CORP), 6 février 1991,
- PATENT ABSTRACTS OF JAPAN vol. 010, no. 051 (M-457), 28 février 1986 & JP 60 199714 A (MAZDA KK), 9 octobre 1985,

## Description

L'invention concerne un dispositif électrohydraulique de correction de hauteur de caisse d'un véhicule automobile à deux essieux.

On connaît déjà des dispositifs de correction de hauteur de véhicule automobile à suspension hydropneumatique comprenant pour chacun des deux essieux des organes de suspension associés à un moyen de distribution hydraulique désigné correcteur de hauteur, apte à les relier alternativement à une source de liquide sous pression et à un réservoir. Le moyen de distribution peut être constitué d'un distributeur à trois états avec tiroir actionné mécaniquement, ou d'un ensemble de deux électrovannes à deux états.

De tels dispositifs de correction de hauteur donnent satisfaction mais sont de réalisation coûteuse et complexe du fait qu'ils comprennent deux moyens de distribution, respectivement associés aux deux essieux, ce qui implique notamment un grand nombre de raccords et de canalisations. Le coût et la complexité du dispositif sont encore plus importants dans les dispositifs usuels qui utilisent des circuits hydrauliques à « centre fermé » c'est-à-dire dans lesquels la source de pression est un accumulateur hydropneumatique alimenté par une pompe par l'intermédiaire d'un conjoncteur/disjoncteur assurant le maintien entre deux seuils déterminés de la pression dans l'accumulateur.
Il est connu du document DE -A-40 35 204 (correspondant au préambule de la revendication 1) un dispositif hydraulique de correction de hauteur pour véhicule automobile dans lequel une pompe amène le fluide hydraulique d'un réservoir à un accumulateur de pression qui est reliée par l'intermédiaire d'une conduite à une électrovalve principale 3/2. Cette électrovanne principale est raccordée par l'intermédiaire d'une conduite présentant deux dérivations à deux électro-vannes 2/2 dont l'une est reliée aux vérins de roue d'un essieu avant ou arrière du véhicule et l'autre est reliée aux vérins de roue de l'autre essieu arrière ou avant du véhicule.
L'invention a pour but de réduire ces inconvénients en proposant un dispositif hydraulique de correction de hauteur, au droit des deux essieux, qui soit plus simple et moins coûteux que les dispositifs usuels.

L'invention a pour objet un dispositif électrohydraulique de correction de hauteur de la caisse d'un véhicule automobile à deux essieux comprenant les caractéristiques définies dans la revendication 1.

De préférence, le moyen de distribution est à trois états, dont un état de repos où il isole les organes de suspension de la source de liquide sous pression et du réservoir, et est constitué de deux électrovannes dont l'une relie la source de liquide sous pression alternativement au répartiteur ou au réservoir en constituant un circuit à centre ouvert, et dont l'autre est susceptible de relier le répartiteur au réservoir.

Selon un mode de réalisation, le moyen de distribution est une électrovanne à deux états qui est propre à relier le répartiteur alternativement au réservoir ou à une électropompe fonctionnant seulement lorsqu'elle est reliée par cette électrovanne au répartiteur.

selon un autre mode de réalisation, le moyen de distribution est à trois états, dont un état de repos où il isole les organes de suspension de la source de pression et du réservoir, et est constitué de deux électrovannes dont l'une est susceptible de relier le répartiteur à un accumulateur hydropneumatique alimenté par une pompe par l'intermédiaire d'un conjoncteur/disjoncteur en constituant un circuit à centre fermé, et dont l'autre est susceptible de relier le répartiteur au réservoir.

Selon une caractéristique avantageuse, les électrovannes sont commandées par un calculateur recevant des signaux de capteurs de hauteur disposés au droit de chaque essieu du véhicule.

On a décrit ci-après, à titre d'exemples non limitatifs, trois modes de réalisation d'un dispositif hydraulique pour la commande d'une suspension selon l'invention, en faisant référence aux dessins annexés parmi lesquels :
- la Figure 1 est le schéma d'un premier mode de réalisation du dispositif selon l'invention muni d'un circuit hydraulique à « centre ouvert » ;
- la Figure 2 montre une variante du premier mode de réalisation de la figure 1 ; et
- la Figure 3 est le schéma d'un autre mode de réalisation du dispositif selon l'invention muni d'un circuit hydraulique à « centre fermé ».

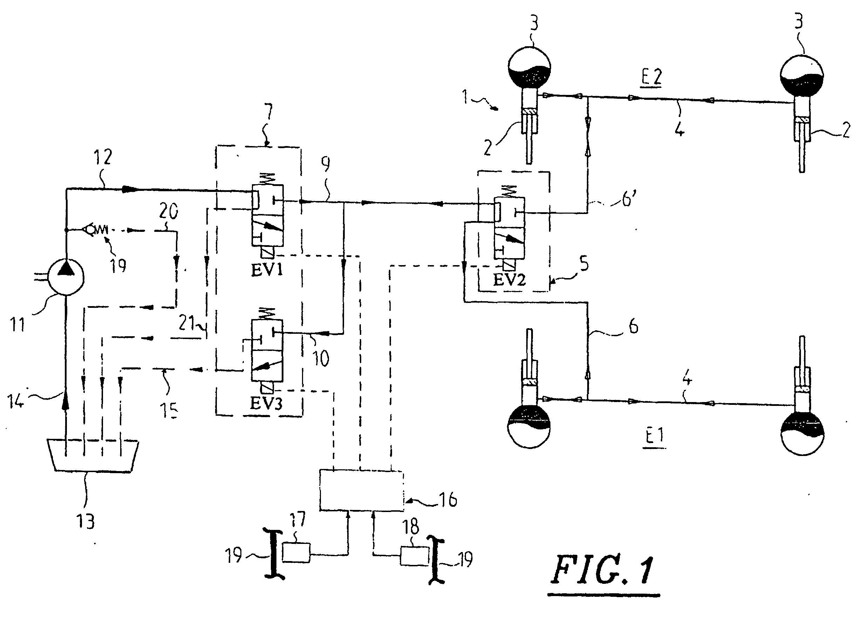

On a représenté à la figure 1, un dispositif de correction de hauteur de la caisse d'un véhicule automobile qui comprend, pour chaque essieu - train de roues- avant E1 ou arrière E2, deux éléments de suspension hydropneumatique 1 comportant chacun un cylindre de suspension 2 et une sphère de suspension 3 enfermant un ressort pneumatique.

Les deux cylindres de suspension 2 de chaque train de roues sont reliés entre eux par un conduit 4 qui est relié à un répartiteur 5 tel qu'une électrovanne EV2 par un conduit 6 ou 6' respectivement pour le train avant E1 et pour le train arrière E2.

L'électrovanne EV2 est propre à relier alternativement les conduits 6 et 6' à deux électrovannes EV1 et EV3 formant un moyen de distribution 7 par l'intermédiaire de deux conduits respectivement 9 et 10.

L'électrovanne EV1 est propre à relier à une pompe 11 -ou source de liquide sous pression- par l'intermédiaire d'un conduit 12, alternativement au conduit 9 et au réservoir 13 par un conduit 21.

La pompe 11 usuellement entraînée par le moteur du véhicule non représenté est reliée au réservoir 13 par l'intermédiaire d'un conduit d'aspiration 14.

Le conduit 12 est relié au réservoir 13 par un clapet de surcharge 19 et un conduit 20 afin d'y ramener le liquide lorsque la pression dépasse un seuil déterminé dans le conduit 12, quand l'électrovanne EV1 relie la pompe 11 aux cylindres 2. L 'électrovanne EV3 est susceptible de relier le conduit 10, donc le répartiteur 5, au réservoir 13 par l'intermédiaire d'un conduit 15.

On notera que les trois électrovannes EV1, EV2 et EV3 sont des électrovannes à deux états, dites « tout ou rien ».

Les électrovannes EV1, EV2 et EV3 sont commandées par un calculateur 16 qui est relié à deux capteurs 17 et 18 détectant la hauteur de la caisse du véhicule au droit des deux essieux, et à cet effet associés à la barre anti-devers 19 de l'essieu correspondant.

Ce calculateur 16 peut recevoir les informations d'autres capteurs, tels qu'un capteur de frein principal ou secondaire du véhicule afin d'inhiber des corrections intempestives.

Ainsi le calculateur 16 pilote les électrovannes EV1, EV2 et EV3 d'une manière qui va être expliquée plus en détail ci-dessous.

Dans une position de hauteur de caisse normale, c'est-à-dire correspondant à une hauteur déterminée, le calculateur 16 place les électrovannes EV1 et EV3 dans leur état de repos, comme représenté sur la figure 1, de sorte que le liquide provenant de la pompe retourne au réservoir par le conduit 21, l'écoulement s'effectuant ainsi à centre ouvert, et que les cylindres de suspension 2 de l'essieu arrière et de l'essieu avant soient isolés de la pompe et du réservoir, respectivement par l'électrovanne EV1 et par l'électrovanne EV3.

Lorsque le véhicule est trop haut ou trop bas au droit d'un essieu, le capteur de hauteur correspondant (17 ou 18) envoie un signal au calculateur 16 qui excite les électrovannes de manière à placer celles-ci dans leur état où elles relient les cylindres de suspension 2 au réservoir 13 (échappement de liquide) ou à la pompe 11 (admission de liquide).

En fonction de la position de la caisse du véhicule déterminée par les capteurs de hauteur (17 ou 18) le calculateur 16 excite ou n'excite pas les électrovannes, suivant un tableau de fonctionnement -table de vérité-qui se présente sous la forme suivante :

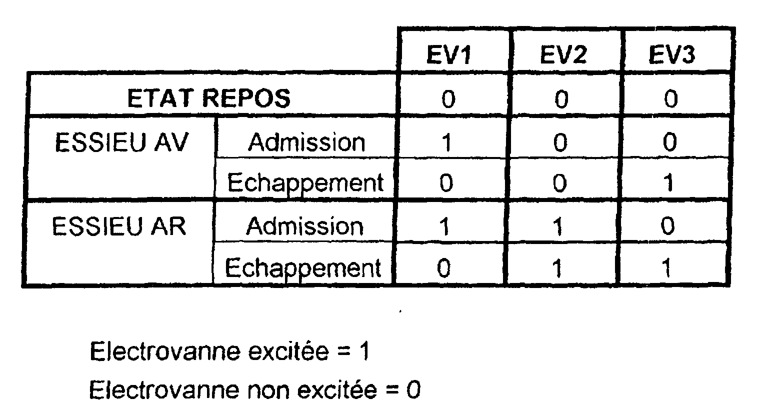

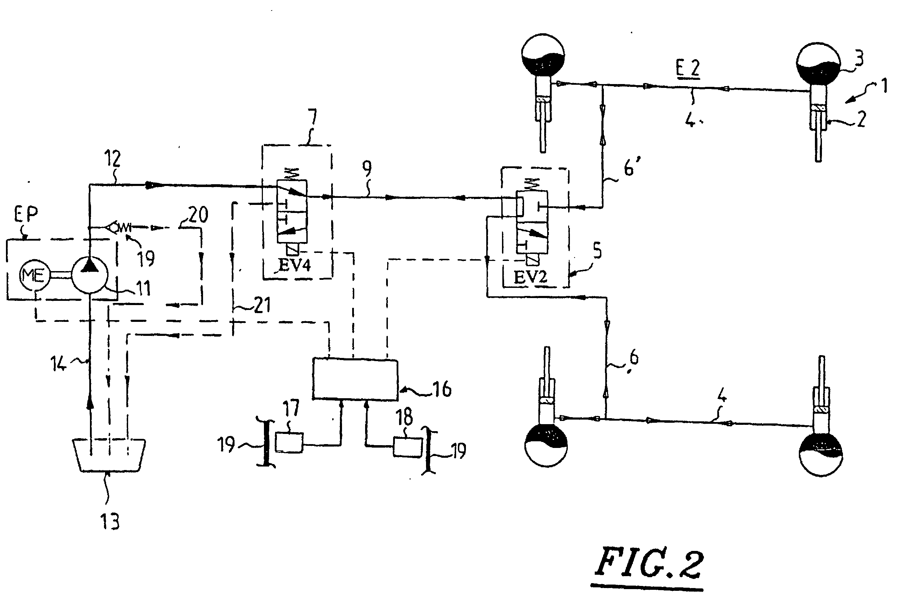

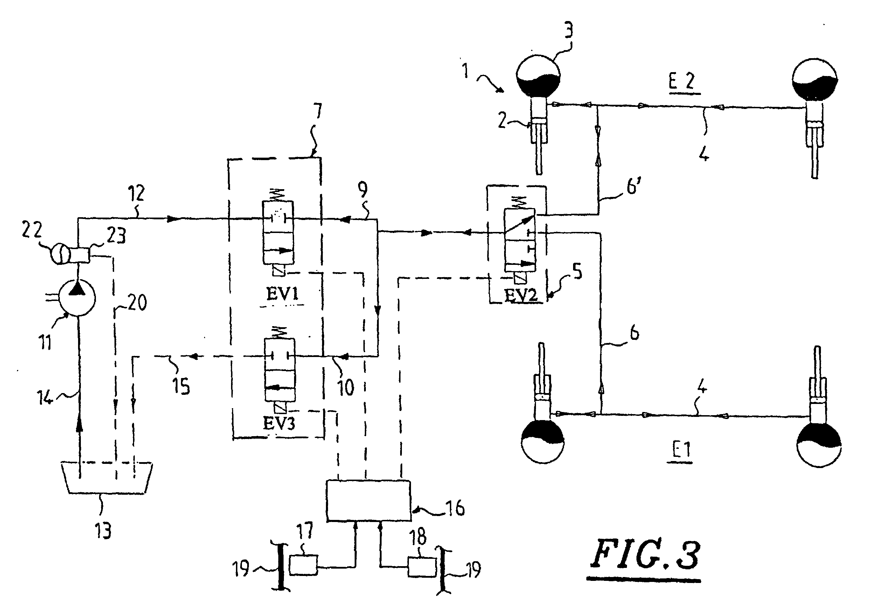

Sur les figures 2 et 3 on a représenté un dispositif de commande d'une suspension selon respectivement un deuxième et un troisième mode de réalisation de l'invention.

Sur ces figures, les éléments analogues à ceux de la figure 1 sont désignés par des références identiques.

Dans le mode de réalisation de la figure 2, le moyen de distribution 7 est constitué d'une électrovanne EV4 « tout ou rien » propre à relier le conduit 9 donc le répartiteur 5, alternativement à la pompe 11 par le conduit 12 ou au réservoir 13 par le conduit 21; La pompe est actionnée par un moteur électrique ME, et désignée électropompe EP.

Le calculateur 16 pilote le dispositif comprenant les deux électrovannes EV4 et EV2 et l'électropompe EP suivant la loi de commande décrite dans la table de vérité suivante:

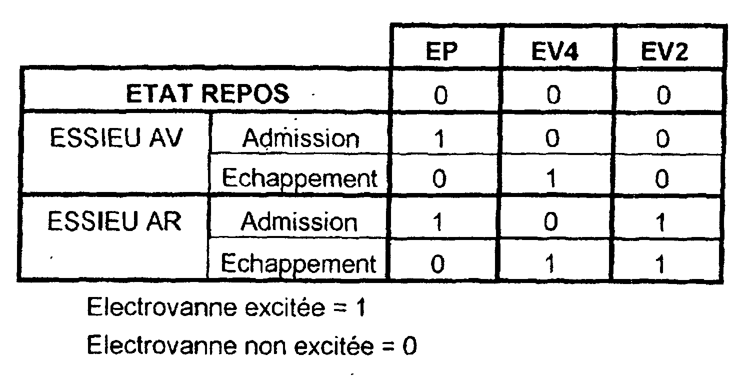

On a ainsi réalisé un dispositif de correction de hauteur qui présente l'avantage d'être de réalisation simple et peu coûteuse, le nombre de canalisations et de raccords étant des plus réduit. L'utilisation d'une électropompe permet en outre une réduction de la consommation du véhicule du fait de son utilisation seulement pour exercer une correction vers le haut d'un essieu. Elle permet également la correction de hauteur moteur à l'arrêt.

On a représenté à la figure 3, un troisième mode de réalisation du dispositif de correction de hauteur à « centre fermé » c'est-à-dire que la source de liquide sous pression est ici un accumulateur hydropneumatique 22 alimenté de façon usuelle par la pompe 11 par l'intermédiaire d'un conjoncteur/disjoncteur 23 régulant la pression dans l'accumulateur. Le moyen de distribution 7 est analogue à celui du premier mode de réalisation, mais ici l'électrovanne d'alimentation EV1 est seulement apte à relier, quand elle est excitée, l'accumulateur 22 au répartiteur 5 donc aux cylindres 2.

Le calculateur 16 pilote les électrovannes de la même façon que pour le premier mode de réalisation suivant la même table de vérité.

Le dispositif selon l'invention présente l'avantage de pouvoir regrouper les électrovannes dans un seul bloc électrohydraulique ou bien encore d'intégrer également le calculateur aux électrovannes de manière à former un bloc mécanique.

Il est bien entendu que l'invention ne se limite pas aux modes de réalisation décrits et représentés, mais en couvre, au contraire, toutes les variantes correspondant aux termes de la revendication 1.

On notera notamment que le calculateur peut recevoir des signaux d'une commande manuelle de correction de hauteur pour les différents modes de réalisations décrits.

## Revendications

1. Dispositif électrohydraulique de correction de hauteur de la caisse d'un véhicule automobile à deux essieux comprenant pour chacun des deux essieux des organes hydrauliques (2) de suspension associés à un moyen de distribution (7) apte à les relier alternativement à une source de liquide sous pression (11) constituée d'une seule pompe ou à un réservoir (13), dans lequel un seul moyen de distribution (7) est associé aux organes (2) de suspension des deux essieux (E1, E2), **caractérisé en ce qu'**un seul répartiteur (5) relie au moyen de distribution alternativement les organes (2) de suspension de l'un ou de l'autre des essieux.

2. Dispositif selon la revendication 1, **caractérisé en ce que** le moyen de distribution (7) est à trois états, dont un état de repos où il isole les organes de suspension (2) de la source de liquide sous pression (11) et du réservoir (13), et est constitué de deux électrovannes (EV1 et EV3) dont l'une (EV1) relie la source de liquide sous pression (11) alternativement au répartiteur (5) ou au réservoir (13) en constituant un circuit à centre ouvert, et dont l'autre (EV3) est susceptible de relier le répartiteur (5) au réservoir (13).

3. Dispositif selon la revendication 1, **caractérisé en ce que** le moyen de distribution (7) est une électrovanne (EV4) à deux états qui est propre à relier le répartiteur (5) alternativement au réservoir (13) ou à une électropompe (EP) fonctionnant seulement lorsqu'elle est reliée par cette électrovanne au répartiteur (5).

4. Dispositif selon la revendication 1, **caractérisé en ce que** le moyen de distribution (7) est à trois états, dont un état de repos où il isole les organes (2) de suspension de la source de pression (11) et du réservoir (13), et est constitué de deux électrovannes (EV1 et EV3) dont l'une est susceptible de relier le répartiteur (5) à un accumulateur (22) hydropneumatique alimenté par une pompe (11) par l'intermédiaire d'un conjoncteur/disjoncteur (23) en constituant un circuit à centre fermé, et dont l'autre est susceptible de relier le répartiteur (5) au réservoir (13).

5. Dispositif selon l'une des revendications précédentes, **caractérisé en ce que** le répartiteur (5) est une électrovanne (EV2).

6. Dispositif selon l'une des revendications précédentes, **caractérisé en ce que** les électrovannes (EV1, EV2 et EV3) sont commandées par un calculateur (16) recevant des signaux de capteurs de hauteur (17 et 18) disposés au droit de chaque essieu du véhicule.

7. Dispositif selon la revendication 3, **caractérisé en ce que** le moyen de distribution (7), le répartiteur (5) et l'électropompe (EP) sont commandés par un calculateur (16) recevant des signaux de capteurs (17 18) disposés au droit de chaque essieu du véhicule.

8. Dispositif selon la revendication 6 ou 7, **caractérisé en ce que** le calculateur (16) reçoit des signaux d'une commande manuelle de correction de hauteur.

## Patentansprüche

1. Elektrohydraulische Höhenkorrekturvorrichtung für die Karosserie eines zweiachsigen Kraftfahrzeugs, die für jede der zwei Achsen hydraulische Aufhängungseinrichtungen (2) aufweist, die mit einer Zuteilungseinrichtung (7) verbunden sind, die die Aufhängungseinrichtungen entweder an eine unter Druck stehende Flüssigkeitsquelle (11), bestehend aus einer einzigen Pumpe oder an ein Reservoir (13) anschließen kann, in dem eine einzige Zuteilungseinrichtung (7) an die Aufhängungseinrichtungen (2) der beiden Achsen (E1, E2) angeschlossen ist,
**dadurch gekennzeichnet, daß**
ein einziger Verteiler (5) die Zuteilungseinrichtung entweder mit den Aufhängungseinrichtungen (2) der einen oder anderen Achse verbindet.

2. Vorrichtung nach Anspruch 1, **dadurch gekennzeichnet, daß** die Zuteilungseinrichtung (7) drei Zustände hat, darunter einen Ruhezustand, in dem sie die Aufhängungseinrichtungen von der unter Druck stehenden Flüssigkeitsquelle (11) und vom Reservoir (13) trennt, und die aus zwei Elektroventilen (EV1 und EV3) besteht, von denen das eine (EV1) die unter Druck stehende Flüssigkeitsquelle (11) entweder mit dem Verteiler (5) oder dem Reservoir (13) verbindet und dadurch ein Schaltkreis mit offenem Zentrum bildet, wobei das andere (EV3) den Verteiler (5) mit dem Reservoir (13) verbinden kann.

3. Vorrichtung nach Anspruch 1, **dadurch gekennzeichnet, daß** die Zuteilungseinrichtung (7) ein Elektroventil (EV4) mit zwei Zuständen ist, das den Verteiler (5) entweder mit dem Reservoir (13) oder mit einer Elektropumpe (EP) verbindet, die nur arbeitet, wenn sie durch dieses Elektroventil mit dem Verteiler (5) verbunden ist.

4. Vorrichtung nach Anspruch 1, **dadurch gekennzeichnet, daß** die Zuteilungseinrichtung (7) drei Zustände hat, darunter einen Ruhezustand, in dem sie die Aufhängungseinrichtungen (2) von der Druckquelle (11) und dem Reservoir (13) trennt, und die aus zwei Elektroventilen (EV1 und EV3) besteht, wobei das eine den Verteiler (5) mit einem hydropneumatischen Akkumulator (22) verbinden kann, der über einen Einschalter/Ausschalter (23) von einer Pumpe (11) versorgt wird, indem eine Schaltung mit geschlossenem Zentrum gebildet wird, wobei das andere den Verteiler (5) mit dem Reservoir (13) verbinden kann.

5. Vorrichtung nach einem der vorstehenden Ansprüche, **dadurch gekennzeichnet, daß** der Verteiler (5) ein Elektroventil (EV2) ist.

6. Vorrichtung nach einem der vorstehenden Ansprüche, **dadurch gekennzeichnet, daß** die Elektroventile (EV1, EV2 und EV3) von einer Recheneinheit (16) gesteuert werden, die Signale von Höhensensoren (17 und 18) empfängt, die vor jeder Achse des Kraftfahrzeugs angeordnet sind.

7. Vorrichtung nach Anspruch 3, **dadurch gekennzeichnet, daß** die Zuteilungseinrichtung (7), der Verteiler (5) und die Elektropumpe (EP) von einer Recheneinheit (16) gesteuert werden, die Signale von Sensoren (17, 18) empfängt, die vor jeder Achse des Kraftfahrzeugs angeordnet sind.

8. Vorrichtung nach Anspruch 6 oder 7, **dadurch gekennzeichnet, daß** die Recheneinheit (16) die Signale einer manuellen Steuereinheit für die Korrektur der Höhe empfängt.

## Claims

1. Electrohydraulic device for height correction of the body of a two-axle motor vehicle comprising, for each of the two axles, hydraulic suspension members (2) associated with a distribution means (7) suitable for connecting them alternately to a source of pressurised liquid (11) constituted by a single pump or to a reservoir (13), in which a single distribution means (7) is associated with the suspension members (2) of the two axles (E1, E2), **characterised in that** a single distributor (5) connects to the distribution means the suspension members (2) of one or other of the axles alternately.

2. Device according to Claim 1, **characterised in that** the distribution means (7) has three states, including a rest state where it isolates the suspension members (2) from the source of pressurised liquid (11) and from the reservoir (13), and is constituted by two electronically-controlled valves (EV1 and EV3), one of which (EV1) connects the source of pressurised liquid (11) alternately to the distributor (5) or the reservoir (13) by constituting an open-centre circuit, and the other of which (EV3) is capable of connecting the distributor (5) to the reservoir (13).

3. Device according to Claim 1, **characterised in that** the distribution means (7) is a two-state electronically-controlled valve (EV4) that is suitable for connecting the distributor (5) alternately to the reservoir (13) or to an electric pump (EP) functioning only when it is connected by this electronically-controlled valve to the distributor (5).

4. Device according to Claim 1, **characterised in that** the distribution means (7) has three states, including a rest state where it isolates the suspension members (2) from the pressure source (11) and from the reservoir (13), and is constituted by two electronically-controlled valves (EV1 and EV3), one of which is capable of connecting the distributor (5) to a hydropneumatic accumulator (22) supplied by a pump (11) via a regulator breaker (23) while constituting a closed-centre circuit, and the other of which is capable of connecting the distributor (5) to the reservoir (13).

5. Device according to one of the preceding claims, **characterised in that** the distributor (5) is a electronically-controlled valve (EV2).

6. Device according to one of the preceding claims, **characterised in that** the electronically-controlled valves (EV1, EV2 and EV3) are controlled by a calculator (16) receiving signals from height sensors (17 and 18) arranged in line with each axle of the vehicle.

7. Device according to Claim 3, **characterised in that** the distribution means (7), the distributor (5) and the electric pump (EP) are controlled by a calculator (16) receiving signals from sensors (17 and 18) arranged in line with each axle of the vehicle.

8. Device according to Claim 6 or 7, **characterised in that** the calculator (16) receives signals from a manual height-correction control.
